# EUROPEAN PATENT APPLICATION

(11) **EP 2 075 295 A1**
(43) Date of publication of application: **01.07.2009**
(21) Application number: 07829057.4
(22) Date of filing: 02.10.2007
(51) Int. Cl.: C09D 201/00, C01F 11/18, C09D 5/02, D21H 19/38

(54) **COATING SOLUTION AND COATED PAPER COATED WITH THE SAME**

(30) Priority: 02.10.2006 JP 2006270908
(71) Applicant: Okutama Kogyo Co., Ltd., Tachikawa-shi Tokyo 190-0012 (JP)
(72) Inventor: SHIMONO, Kazuhisa, Tokyo 190-0012 (JP); TAKANO, Tatsuo, Tokyo 190-0012 (JP); KAWAZU, Toru, Tokyo 190-0012 (JP)
(74) Representative: Hayes, Adrian Chetwynd
(86) International application number: PCT/JP2007/069317
(87) International publication number: WO 2008/041715

(57) **Abstract**

A coating solution comprising: (A) an aragonite-type light calcium carbonate microparticle having an average major axis diameter of 1.0 to 2.8 µm and an average minor axis diameter of 0.15 to 0.3 µm, which is produced by diluting a calcium hydroxide slurry that has been treated by high-speed shearing until the slurry has a viscosity of 1000 cP or more at a concentration of 400 g/l to a concentration more than 50 g/l and then blowing carbon dioxide into the diluted slurry at a reaction starting temperature of 20 to 60°C and at a rate of 1 to 3 I/min per kg of calcium hydroxide; and (B) a pigment comprising a wet heavy calcium carbonate cake. The coating solution enables to provide a coated paper having an excellent degree of brilliance and an excellent degree of whiteness, despite containing no kaolin.

## Description

### Technical Field

The present invention relates to a method for producing a kaolin-free paper coating solution for providing coated paper having excellent glossiness and whiteness, as well as coated paper coated with the paper coating solution produced by the method.

### Background Technology

Pigment formulations used for coated paper depend on the product grade, type of the base paper, and coating weight. In general cases, a mixture of kaolin and calcium carbonate is used as the pigment formulation. Kaolin and calcium carbonate contribute to improvements in glossiness and whiteness, respectively.

Preferred examples of the calcium carbonate used for the formulation include the following ones: Patent Document 1 suggests aragonite-type acicular calcium carbonate having a major axis diameter of 1.0 to 2.8 µm and an average minor axis diameter of 0.1 to 0.29 µm which is produced by allowing calcium hydroxide having a given viscosity to react with carbon dioxide during a high-shear mixing processing under given conditions; Patent Document 2 suggests aragonite-type acicular calcium carbonate produced by blowing carbon dioxide into milk of lime containing 50 to 400 g/L of calcium hydroxide while changing the blowing rate and reaction initiation temperature every time a given carbonation rate is achieved, thereby completing the carbonation reaction; and Patent Document 3 suggests aragonite-type acicular calcium carbonate produced by adding seed crystals to a calcium hydroxide slurry, and blowing carbon dioxide into the slurry while changing the blowing rate every time the seed crystals grow to a given size.

As fillers for paper making to be mixed with talc, kaolin and the like, on the other hand, Patent Document 4 describes a mixture of aragonite-type acicular calcium carbonate having a length of 0.5 to 3 µm and a diameter of 0.1 to 0.3 µm, and plate-shaped basic magnesium carbonate having a particle size of 2 to 7 µm; Patent Document 5 describes a coating solution for double coating which is a combination of an undercoat solution containing 50% by weight or more of acicular-type precipitated calcium carbonate having a major axis diameter of 4.0 µm or less and a minor axis diameter of 0.5 µm or less, and a topcoat solution containing 50% by weight or more of ground calcium carbonate having a particle size of 0.5 to 3.0 µm; and Patent Document 6 describes two types of calcium carbonate, that is, aragonite-type and calcite-type ones as pigments for ink receiving layers of inkjet recording media.
Patent Document 1: JP 4-295010 A (claims and elsewhere)
Patent Document 2: JP 55-51852 B (claims and elsewhere)
Patent Document 3: JP 1-34930 B (claims and elsewhere)
Patent Document 4: JP 6-10298 A (claims and elsewhere)
Patent Document 5: JP 6-73698 A (claims and elsewhere)
Patent Document 6: JP 2005-280035 A (claims and elsewhere)

### Disclosure of the Invention

Kaolin, which has been used as a coated paper pigment component in combination with calcium carbonate to improve glossiness, is getting scarce along with the exhaustion of natural resources. In view of the circumstance, the present invention is aimed at developing a pigment component for replacing with kaolin.

As a result of dedicated research for developing a kaolin-free paper coating solution to give coated paper with excellent glossiness and whiteness, the inventors have found that a kaolin-free paper coating solution for giving coated paper with excellent glossiness and whiteness is obtained through the use of a mixture of acicular microparticles of aragonite-type precipitated calcium carbonate having an average major axis diameter of 1.0 to 2.8 µm and an average minor axis diameter of 0.15 to 0.3 µm which have been produced by a given method, and wet-process ground calcium carbonate. The present invention has been made on the basis of the finding.

More specifically, the present invention provides a method for producing a paper coating solution which comprises: subjecting calcium hydroxide to a high-shear mixing processing to give an aqueous calcium hydroxide slurry having a viscosity of 1000 cP or more at a concentration of 400 g/L, diluting the slurry to give a concentration not lower than 50 g/L, and then blowing carbon dioxide into the dilution at a rate of 1 to 3 L/minute per 1 kg of calcium hydroxide at a reaction initiation temperature of 20 to 60°C to give an aqueous slurry containing (A) acicular particles of aragonite-type precipitated calcium carbonate having an average major axis diameter of 1.0 to 2.8 µm and an average minor axis diameter of 0.15 to 0.3 µm; subjecting the aqueous slurry to dehydration treatments using a centrifugal dehydrator and using a pressing-type dehydrator followed by a dispersion treatment in the presence of a dispersant; and blending the thus prepared matter with (B) slurry-type wet-process ground calcium carbonate particles having an average particle size of 0.5 to 3 µm, wherein the mass ratio as dried of components (A) and (B) is selected in the range of 20:80 to 90:10, as well as coated paper coated with the paper coating solution produced by the method. Regarding the average particle size, the minor and major axis diameters are averages calculated by measuring the size of 50 particles of calcium carbonate in an SEM photomicrograph (x 10000) using a Digimatic Caliper.

In the present invention, the aqueous calcium hydroxide slurry used for the starting material of the component (A) can be prepared by hydrating quicklime powder or adding slaked lime powder in water to give a suspension containing 400 g of calcium hydroxide in 1 L of the suspension, agitating the suspension at 25°C using an agitator or kneader to give a viscosity of 1000 cP or more, and then diluting with water to give a slurry having a concentration higher than 50 g/L.

The agitator or kneader used for the high-shear mixing processing is preferably a high-speed impeller disperser such as a cowles mixer, sand mill, or homogenizer.

The viscosity is measured with a Brookfield viscometer at a rotor speed of 60 rpm. The viscosity must be 1000 cP or more. The viscosity not exceeding 1000 cP is not preferable since the resultant aragonite-type acicular particles have poor dispersibility.

The aqueous calcium hydroxide slurry prepared in this way is subjected to a carbonation treatment through blowing carbon dioxide at a rate of 1 to 3 L/minute of carbon dioxide per 1 kg of calcium hydroxide.

The carbon dioxide to be blown may be not necessarily pure, and may be a mixture of carbon dioxide and an inactive gas such as a nitrogen gas, wherein the carbon dioxide concentration is 15% by volume or more or, preferably, 20% by volume or more.

It is necessary that the carbon dioxide be blown at a rate of 1 to 3 L/minute per 1 kg of calcium hydroxide. If the rate is less than 1 L/minute, the reaction time is so long that the productivity deteriorates while, if more than 3 L/minute, the aragonite-type acicular particles have poor dispersibility, and tend to include angular particles.

In the course of the carbonation treatment, the reaction initiation temperature should be selected from 20 to 60°C, and the resultant acicular particles of aragonite-type calcium carbonate should be controlled so as to have an average major axis diameter of 1.0 to 2.8 µm and an average minor axis diameter of 0.15 to 0.3 µm. The particle size decreases with decrease in the reaction initiation temperature while, increases with increase in the reaction initiation temperature. If the particle size is too small, the particles excessively agglomerate so as to have poor dispersibility. If a paper coating solution containing such particles is applied to base paper, accordingly, the coated paper has poor whiteness and opacity. On the other hand, if a coating solution containing particles having too large a particle size is applied to base paper, the coated paper is inferior in sheet gloss, ink absorption, and setting properties.

If the reaction initiation temperature of the carbonation treatment is below 20°C, calcite tends to occur resulting in mixing of angular particles in the aragonite-type acicular particles. On the other hand, if the reaction initiation temperature is higher than 60°C, the aragonite-type acicular particles tend to include calcite-type spindle particles. Such inclusion of angular or spindle particles causes the deterioration of the optical properties of the coated paper.

The wet-process ground calcium carbonate to be used as the component (B) which is mixed with the aforementioned acicular particles of aragonite-type calcium carbonate is a powder composed of particles having an average particle size of 0.5 to 3 µm which is produced by grinding limestone with water under a wet condition and, drying the ground product, followed by classification. In the present invention, the wet-process ground calcium carbonate can be freely selected from commercially available products. The average particle size is measured in the same manner as for the wet-process ground calcium carbonate as the component (A).

In the inventive method, a paper coating solution is obtained by combining the acicular particles of aragonite-type precipitated calcium carbonate as the component (A) with the wet-process ground calcium carbonate as the component (B) in the mass ratio of 20:80 to 90:10 or, preferably, 30:70 to 80:20. If the proportion of the aragonite-type precipitated calcium carbonate is below the range, the resultant coated paper has poor sheet gloss while, if the proportion of the aragonite-type precipitated calcium carbonate is beyond the range, control of the solid content is difficult.

In another method of the present invention, a paper coating solution is prepared by uniformly mixing the components (A) and (B) with 3 to 20 parts by mass or, preferably, 5 to 15 parts by mass of a binder, 0.1 to 2.0 parts by mass of a dispersant, and 30 to 50 parts by mass of water per 100 parts by mass of the total amount of components (A) and (B), and then dispersing the mixture.

The binder to be used includes casein, starch, modified starch, synthetic resin emulsions such as an acrylic emulsion, synthetic resin latexes such as a styrene-butadiene latex and the like.

The dispersant to be used includes a surfactant such as sodium stearate and sodium palmitate. Accordingly to desire, it is optional to further add auxiliaries conventionally used for paper coating solutions, such as a waterproofing agent, a humectant, a bactericide, a coloring agent, a flatting agent and the like.

The paper coating solution produced by the method of the present invention should be adjusted to have a solid content of 50 to 80% by mass or, preferably, 60 to 70% by mass before use.

Then, coated paper using the paper coating solution prepared as described above is prepared as follows. The paper coating solution is applied with, for example, a blade coater or roll coater to base paper to give a coating weight of 5 to 20 g/m² or, preferably, 8 to 15 g/m² for the total of both surfaces, and then dried.

The coated paper thus obtained is kaolin-free, but is comparable or superior to kaolin-containing coated paper in glossiness and whiteness.

### Best Mode for Carrying Out the Invention

Best modes for carrying out the present invention will be described below, but the present invention is never limited by the following examples.

In the description of the examples, the whiteness, opacity, and sheet gloss were measured by the following methods.
(1) Whiteness was measured according to JIS P8148.
(2) Opacity was measured according to JIS P8149.
(3) Sheet gloss was measured according to JIS P8142.

### Reference Example 1 (Preparation of slurry containing acicular microparticles of aragonite-type precipitated calcium carbonate)

Calcium hydroxide (the special-choice slaked lime, a product of Okutama Kogyo Co., Ltd.) was suspended in water to give a concentration of 400 g/L, and agitated with a cowles mixer (manufactured by Shimazaki Mixing Equipment Co., Ltd.) to prepare an aqueous suspension of calcium hydroxide having a Brookfield viscosity of 2500 cP at 25°C (60 rpm/1 minute).

The aqueous calcium hydroxide suspension thus obtained was adjusted so as to have a concentration of 150 g/L by diluting with water, and 15 L of the solution was fed into a batch type reaction vessel wherein the temperature of the suspension was adjusted to 20 °C. A gas containing 30% by volume of carbon dioxide was introduced into the vessel at a rate of 21.7 L/minute (1.3 Nm³/hr), and the suspension was allowed to react until the carbonation rate reached 100%, thereby preparing an aqueous slurry containing acicular particles of aragonite-type precipitated calcium carbonate having an average major axis diameter of 2.1 µm and an average minor axis diameter of 0.15 µm. The minor and major axis diameters are averages calculated by measuring the size of 50 particles of calcium carbonate in an SEM photomicrograph (x 10000) using a Digimatic Caliper.

The precipitated calcium carbonate slurry was subjected to a primary dehydration treatment using a centrifugal dehydrator, and then to a secondary dehydration treatment using a pressing-type dehydrator, thereby preparing a calcium carbonate cake.

A sodium polyacrylate-based dispersant was added to the thus obtained calcium carbonate cake in 1.2% by mass based on the amount of the calcium carbonate, subjected to a pre-dispersion treatment using a blade disperser, and then to a secondary dispersion treatment using a sand mill, thereby preparing a dispersion slurry having a solid content of 70%.

### Example 1

40 Parts by mass of the slurry, in which acicular particles of aragonite-type precipitated calcium carbonate were dispersed, obtained in Reference Example 1, were mixed with 60 parts by mass of a commercially available slurry containing wet-process ground calcium carbonate ("Carbital 90", average particle size: 1.2 µm, a product of Imerys Minerals Japan K.K.) under agitating, thereby preparing a mixed slurry.

The slurry was mixed with 3 parts by mass of an urea-phosphorylated starch (a product of Nihon Shokuhin Kako Co., Ltd.) as a binder, 10 parts by mass of a styrene-butadiene latex (a product of JSR Corporation), and 1 part by mass of calcium stearate (a product of San Nopco Limited) as a dusting inhibitor. The pH of the mixture was adjusted to 10 with sodium hydrate (a product of Wako Pure Chemical Industries, Ltd.), thereby preparing a paper coating solution having a solid content of 63%.

The paper coating solution thus obtained was applied by hand using a wire rod for coating to commercially available semi-fine paper at a coating weight of 8 g/m² on each surface, and then subjected to a supercalendering treatment once under linear pressure of 50 kg/cm² and surface temperature of 55°C conditions, thereby making coated paper. The coated paper thus obtained was measured for its whiteness, opacity, and sheet gloss. The results are shown in Table 1.

### Example 2

A paper coating solution and coated paper were prepared in the same manner as in Example 1, except that 60 parts by mass of the precipitated calcium carbonate-dispersing slurry obtained in Reference Example 1 and 40 parts by mass of wet-process ground calcium carbonate were used as the starting materials for the mixed slurry. The physical properties of the coated paper are shown in Table 1.

### Example 3

A paper coating solution and coated paper were prepared in the same manner as in Example 1, except that 80 parts by mass of the precipitated calcium carbonate-dispersing slurry obtained in Reference Example 1 and 20 parts by mass of wet-process ground calcium carbonate were used. The physical properties of the coated paper are shown in Table 1.

### Example 4

A paper coating solution and coated paper were prepared in the same manner as in Example 1, except that the paper coating solution was applied by hand using a wire rod for coating to commercially available semi-fine paper at a coating weight of 12 g/m² on each surface. The physical properties of the coated paper are shown in Table 1.

### Reference Example 2

A paper coating solution and coated paper were prepared in the same manner as in Example 1, except that the paper coating solution was applied by hand using a wire rod for coating to commercially available semi-fine paper at a coating weight of 20 g/m² on each surface. The physical properties of the coated paper are shown in Table 1.

### Reference Example 3

A paper coating solution and coated paper were prepared in the same manner as in Example 3, except that the paper coating solution was applied by hand using a wire rod for coating to commercially available semi-fine paper at a coating weight of 20 g/m² on each surface. The physical properties of the coated paper are shown in Table 1.

### Comparative Example 1

A paper coating solution and coated paper were prepared in the same manner as in Example 1, except that 40 parts by mass of a commercially available slurry ["TamaPearl TP-123CS", a product of Okutama Kogyo Co., Ltd., (solid content: 70%)] in which acicular particles of aragonite-type precipitated calcium carbonate having an average major axis diameter of 3.0 µm and an average minor axis diameter of 0.4 µm were dispersed, and 60 parts by mass of wet-process ground calcium carbonate were used. The physical properties of the coated paper are shown in Table 1.

### Comparative Example 2

A paper coating solution and coated paper were prepared in the same manner as in Example 1, except that 40 parts by mass of a commercially available slurry ["TamaPearl TP-221 GS", a product of Okutama Kogyo Co., Ltd., (solid content: 70%)] in which spindle particles of calcite-type calcium carbonate having an average major axis diameter of 1.5 µm and an average minor axis diameter of 0.3 µm were dispersed, and 60 parts by mass of wet-process ground calcium carbonate were used. The physical properties of the coated paper are shown in Table 1.

### Comparative Example 3

100 Parts by mass of kaolin microparticles produced in Brazil ("Amazon Plus", a product of Cadam) were dispersed together with 0.2 part by mass of a sodium polyacrylate-based dispersant to give a slurry having a solid content of 70%. A paper coating solution and coated paper were prepared in the same manner as in Example 1, except that 40 parts by mass of the kaolin-dispersing slurry thus obtained and 60 parts by mass of wet-process ground calcium carbonate were used. The physical properties of the coated paper are shown in Table 1.

### Comparative Example 4

A paper coating solution and coated paper were prepared in the same manner as in Comparative Example 3, except that the paper coating solution was applied by hand using a wire rod for coating to commercially available semi-fine paper at a coating weight of 12 g/m² on each surface. The physical properties of the coated paper are shown in Table 1.

### Comparative Example 5

A paper coating solution and coated paper were prepared in the same manner as in Comparative Example 3, except that the paper coating solution was applied by hand using a wire rod for coating to commercially available semi-fine paper at a coating weight of 20 g/m² on each surface. The physical properties of the coated paper are shown in Table 1.

### Comparative Example 6

A paper coating solution and coated paper were prepared in the same manner as in Example 1, except that 10 parts by mass of the precipitated calcium carbonate-dispersing slurry obtained in Reference Example 1, 60 parts by mass of wet-process ground calcium carbonate, and 30 parts by mass of kaolin microparticles produced in Brazil ("Amazon Plus", a product of Cadam) were used. The physical properties of the coated paper are shown in Table 1.

### Comparative Example 7

A paper coating solution and coated paper were prepared in the same manner as in Example 1, except that 20 parts by mass of the precipitated calcium carbonate-dispersing slurry obtained in Reference Example 1, 60 parts by mass of wet-process ground calcium carbonate, and 20 parts by mass of kaolin microparticles were used. The physical properties of the coated paper are shown in Table 1.

**Table 1**

| Example | Physical property | | |
|---|---|---|---|
| | Whiteness | Opacity | Sheet gloss |
| Example 1 | 73.6 | 91.6 | 52.9 |
| Example 2 | 73.8 | 92.2 | 54.3 |
| Example 3 | 73.9 | 92.3 | 56.1 |
| Example 4 | 74.4 | 92.7 | 56.4 |
| Reference Example 2 | 75.2 | 94.1 | 61.5 |
| Reference Example 3 | 75.4 | 94.8 | 70.5 |
| Comparative Example 1 | 73.6 | 91.4 | 46.5 |
| Comparative Example 2 | 73.4 | 91.0 | 42.1 |
| Comparative Example 3 | 70.6 | 91.3 | 52.6 |
| Comparative Example 4 | 71.1 | 92.0 | 55.4 |
| Comparative Example 5 | 72.4 | 93.7 | 60.9 |
| Comparative Example 6 | 71.3 | 91.4 | 52.7 |
| Comparative Example 7 | 71.9 | 91.5 | 52.6 |

These results indicate that the coated papers coated with paper coating solutions containing precipitated calcium carbonate and ground calcium carbonate which are produced by the inventive method are superior in whiteness and sheet gloss, compared with the coated papers coated with paper coating solutions of prior art containing kaolin microparticles and ground calcium carbonate.

### Industrial Utilizability

Since the coated paper of the present invention contains no kaolin, the paper sludge incineration ash exhausted as papermaking waste contains calcium carbonate and/or calcium oxide, which can be collected and recycled.

Accordingly, the present invention provides kaolin-free coated paper with excellent physical properties which is useful in a wide range of industrial fields.

## Claims

1. (Cancelled)

2. (Cancelled)

3. (Cancelled)

4. (Cancelled)

5. (Cancelled)

6. (Cancelled)

7. (New) A method for producing a paper coating solution which comprises: subjecting calcium hydroxide to a high-shear mixing processing to give an aqueous calcium hydroxide slurry having a viscosity of 1000 cP or more at a concentration of 400 g/L, diluting the slurry to give a concentration not lower than 50 g/L, and then blowing carbon dioxide into the dilution at a rate of 1 to 3 L/minute per 1 kg of calcium hydroxide at a reaction initiation temperature of 20 to 60°C to give an aqueous slurry containing (A) acicular microparticles of aragonite-type precipitated calcium carbonate having an average major axis diameter of 1.0 to 2.8 µm and an average minor axis diameter of 0.15 to 0.3 µm;
subjecting the aqueous slurry to dehydration treatments using a centrifugal dehydrator and using a pressing-type dehydrator followed by a dispersion treatment in the presence of a dispersant; and
blending the thus prepared matter with (B) slurry type wet-process ground calcium carbonate particles having an average particle size of 0.5 to 3 µm, wherein the mass ratio as dried of components (A) and (B) is selected in the range of 20:80 to 90:10.

8. (New) The method for producing a paper coating solution according to claim 7, wherein the amount of the dispersant to be added is 0.1 to 2.0 parts by mass per 100 parts by mass of the total amount of components (A) and (B).

9. (New) The method for producing a paper coating solution according to claim 7 or 8, wherein 3 to 20 parts by mass of a binder is admixed per 100 parts by mass of the total amount of components (A) and (B).

10. (New) The method for producing a paper coating solution according to claim 9, wherein casein, starch, modified starch, acrylic emulsion or styrene-butadiene latex is employed as the binder.

11. (New) Coated paper which is coated with the paper coating solution produced by the method according to any one of claims 7 to 10.

12. (New) Coated paper, which comprises applying the paper coating solution produced by the method according to any one of claims 7 to 10 to both surfaces of base paper at a coating weight of 8 to 15 g/m² for the total of both surfaces, and then drying the paper coating solution.
